# EUROPEAN PATENT APPLICATION

(11) **EP 1 986 342 A1**
(43) Date of publication of application: **29.10.2008**
(21) Application number: 07738589.6
(22) Date of filing: 14.03.2007
(51) Int. Cl.: H04B 7/005

(54) **WIRELESS TRANSMITTING DEVICE AND WIRELESS TRANSMITTING METHOD**

(30) Priority: 15.03.2006 JP 2006070963
(71) Applicant: MATSUSHITA ELECTRIC INDUSTRIAL CO., LTD., Osaka 571-8501 (JP)
(72) Inventor: MIYOSHI, Kenichi c/o Matsushita Electric Industrial Co. Ltd, Shiromi, Chuo-ku, Osaka 540-6207 (JP); IMAMURA, Daichi c/o Matsushita Electric Industrial Co. Ltd, Shiromi, Chuo-ku, Osaka 540-6207 (JP); SUZUKI, Hidetoshi c/o Matsushita Electric Industrial Co. Ltd, Shiromi, Chuo-ku, Osaka 540-6207 (JP); ARAMAKI, Takashi c/o Matsushita Electric Industrial Co. Ltd, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/055119
(87) International publication number: WO 2007/105765

(57) **Abstract**

There is provided a wireless transmitting device, the reception quality of which can be improved by effectively using the cyclic prefix. In the wireless transmitting device, a data mapping determination unit (204) determines a data mapping method according to tmax information, and a data mapping unit (207) performs data mapping on the signals outputted from modulation units (205, 206) according to the data mappingmethod determined by the data mapping determination unit (204). The data mapping determination unit (204) acquires the tmax information transmitted from a communication party and determines to map important information, such as of a control channel, a systematic bit, a resending bit, ACK/NACK information (ACK or NACK), a CQI (Channel Quality Indicator), a TFCI (Transport Format Combination Indicator), information necessary for modulation, a pilot, a power control bit, etc., on the data from its tail end to the portion corresponding to (TGI - tmax).

## Description

### Technical Field

The present invention relates to a radio transmitting apparatus and radio transmission method. More particularly, the present invention relates to a radio transmitting apparatus and radio transmission method used in a single-carrier transmission system.

### Background Art

In recent years, frequency equalization single-carrier transmission systems have been studied with an eye toward next-generation mobile communication systems. In the frequency equalization single-carrier transmission system, data symbols arranged in the time domain are transmitted by a single carrier. A receiving apparatus compensates signal distortion in the transmission path by equalizing that distortion in the frequency domain. More specifically, the receiving apparatus calculates a channel estimation value for each frequency in the frequency domain, and performs weighting for equalizing channel distortion on a frequency-by-frequency basis. Then the received data is demodulated.

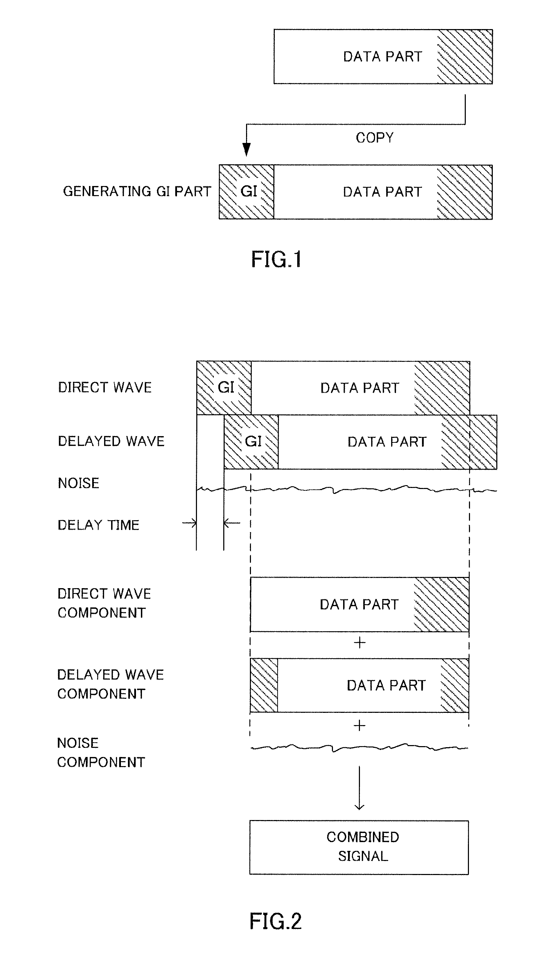

A technique disclosed in Patent Document 1 relates to the above frequency equalization single-carrier transmission systems and will be briefly explained as below. As shown in FIG.1, the transmission system disclosed in Patent Document 1 generates signals in which a predetermined portion of the rear part of transmission data (datapart in the drawing) is attached to the beginning of the data part as a guard interval (hereinafter abbreviated as "GI"). The signals generated as such are then transmitted from the transmitting apparatus, and signals combining direct waves and delayed waves arrive at the receiving apparatus. At the receiving apparatus, as shown in FIG.2, a timing synchronization process is performed for the received data, and signals of the length of the data part are extracted from the beginning of the data part of the direct wave. The extracted signals thereby include the direct wave component, the delayed wave component and the noise component in the receiving apparatus, and the extracted signals combine all of these components. Then, the extracted signals are subjected to signal distortion equalization process in the frequency domain (frequency domain equalization) and demodulated.

A GI is also called a cyclic prefix ("CP"). Patent Document 1: Japanese Patent Application Laid-Open No. 2004-349889

### Disclosure of Invention

### Problems to be Solved by the Invention

However, according to the technique disclosed in Patent Document 1 above, inserting GIs equals transmitting the same data repeatedly, and so the energy of the GI parts not used in decoding is wasted. Generally, GIs are made 10 to 25 % of the data length. In other words, nearly 10 to 25% of transmission energy is always wasted.

It is therefore an object of the present invention to provide a radio transmitting apparatus and radio transmission method that improves received quality through effective use of GIs.

### Means for Solving the Problem

The radio transmitting apparatus of the present invention employs a configuration including: a mapping section that maps one of a channel quality indicator and a transport format combination indicator to a part occupying a cyclic prefix length from an end of a data part in a head block of a subframe, and maps one of ACK and NACK to a part occupying the cyclic prefix length from an end of a data part in a block following the head block; an adding section that generates a cyclic prefix having the cyclic prefix length from each data part and adds the generated cyclic prefix to a beginning of the each data part; and a transmitting section that transmits data with the cyclic prefix.

### Advantageous Effect of the Invention

According to the present invention, received quality is improved through effective use of cyclic prefixes.

### Brief Description of Drawings

FIG.1 shows a method of generating a GI;
FIG.2 explains receiving processing in the receiving apparatus disclosed in Patent Document 1;
FIG.3 is a block diagram showing a configuration of the receiving apparatus, according to Embodiment 1 of the present invention;
FIG.4 shows data received by the receiving apparatus shown in FIG.3;
FIG.5 explains receiving processing in the receiving apparatus shown in FIG.3;
FIG.6 is a block diagram showing a configuration of the transmitting apparatus, according to Embodiment 2 of the present invention;
FIG.7 explains a method of generating a GI;
FIG.8 is a transmission format showing a method of data mapping (method A);
FIG.9 is a transmission format showing a method of data mapping (method B);
FIG.10 is a transmission format showing a method of data mapping (method C);
FIG.11 is a transmission format showing a method of data mapping (method D);
FIG.12 is a transmission format showing a method of data mapping (method E);
FIG.13 is a transmission format showing a method of data mapping (method F);
FIG.14 is a transmission format showing a method of data mapping (method G);
FIG.15 is a transmission format showing a method of data mapping (method H);
FIG.16 is a block diagram showing a configuration of the receiving apparatus, according to Embodiment 4 of the present invention;
FIG.17 explains receiving processing in the receiving apparatus shown in FIG.16;
FIG.18 is a block diagram showing a configuration of the transmitting apparatus, according to Embodiment 4 of the present invention;
FIG.19 is a transmission format showing a method of data mapping;
FIG.20 is a transmission format showing a method of data mapping;
FIG.21 explains receiving processing in the receiving apparatus, according to Embodiment 5 of the present invention;
FIG.22 is a transmission format showing a method of data mapping;
FIG.23 is a transmission format showing a method of data mapping;
FIG.24 is a transmission format showing a method of data mapping;
FIG.25 is a transmission format showing a method of data mapping;
FIG.26 is a transmission format showing a method of data mapping; and
FIG.27 is a transmission format showing a method of data mapping.

### Best Mode for Carrying Out the Invention

Embodiments of the present invention will be described below in detail with reference to the accompanying drawings.

### (Embodiment 1)

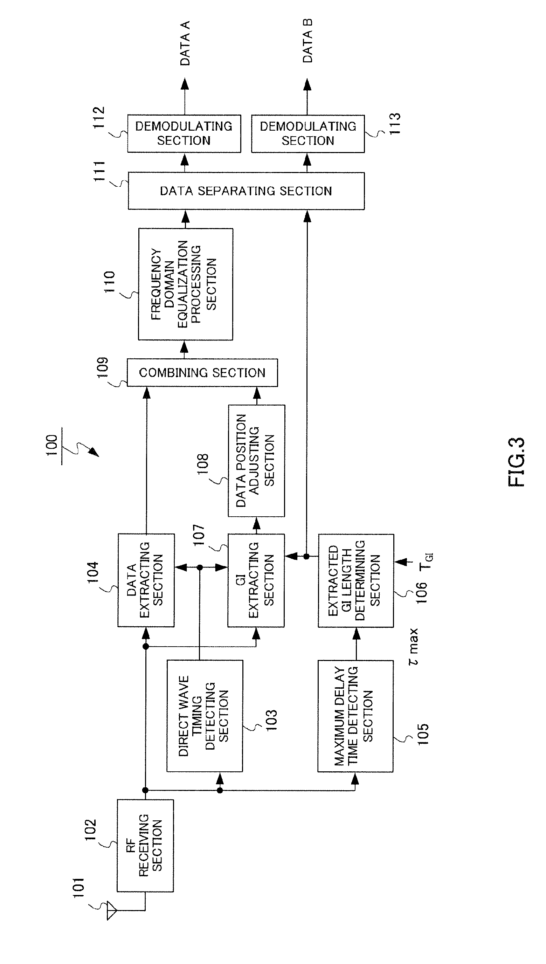

FIG.3 is a block diagram showing a configuration of receiving apparatus 100 according to Embodiment 1 of the present invention. In the figure, RF receiving section 102 performs predetermined radio receiving processing such as down-conversion and A/D conversion for a signal received via antenna 101, and outputs the processed signal to direct wave timing detecting section 103, data extracting section 104, maximum delay time detecting section 105 and GI extracting section 107.

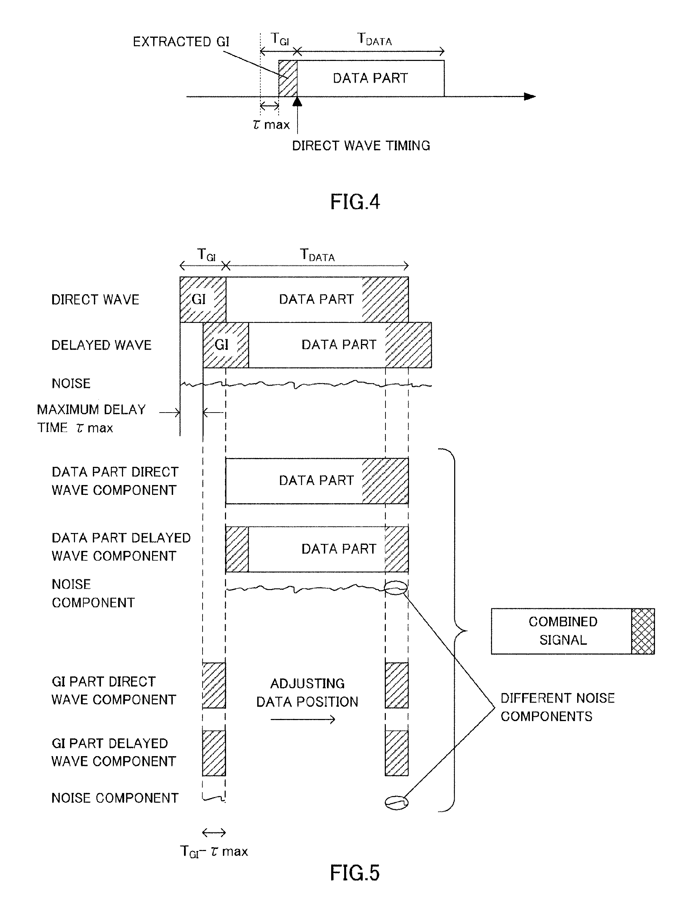

Direct wave timing detecting section 103 detects the timing of the beginning of the data part of the direct wave (the direct wave timing) from the signal outputted fromRFreceiving section 102 as shown in FIG. 4, and outputs the detected timing to data extracting section 104 and GI extracting section 107.

Based on the timing outputted from direct wave timing detecting section 103, data extracting section 104 extracts the signal having a length of T_{DATA} from the beginning of the data part of the direct wave of the signal outputted from RF receiving section 102, and outputs the extracted signal to combining section 109.

Maximum delay time detecting section 105 detects the maximum time of the delayed wave (the maximum delay time τmax) from the signal outputted from RF receiving section 102, and outputs the detected maximum delay time τmax to extracted GI length determining section 106.

Extracted GI length determining section 106 acquires T_{GI}, which shows the length of the GI in the received data, and outputs the length found by subtracting the maximum delay time τmax from the acquired T_{GI} to GI extracting section 107 and data separating section 111.

GI extracting section 107 extracts the GI having the length found by extracted GI length determining section 106 from the signal outputted from RF receiving section 102, and outputs the extracted GI (hereinafter referred to as "extracted GI") to data position adjusting section 108. Data position adjusting section 108 adjusts the rear end of the extracted GI outputted from GI extracting section 107 to the rear end of the data part, and outputs the extracted GI after the data position adjustment to combining section 109.

Combining section 109 combines the data part outputted from data extracting section 104 and the extracted GI outputted from data position adjusting section 108, and outputs the combined signal to frequency domain equalization processing section 110. Frequency domain equalization processing section 110 compensates the distortion of the signal outputted from combining section 109 by equalizing the distortion of the signal in the frequency domain, and outputs the compensated signal to data separating section 111.

Data separating section 111 separates the signal outputted from frequency domain equalization processing section 110 at the position going back the extracted GI length determined by extracted GI length determining section 106 from the rear end of the data part. That is, data separating section 111 separates the part combined with the extracted GI from the data part. The part including the beginning of the data part, not combined with the extracted GI, is outputted to demodulating section 112. The part including the rear end of the data part, combined with the extracted GI, is outputted to demodulating section 113.

Demodulating sections 112 and 113 each demodulate the data outputted from data separating section 111. Demodulating section 112 outputs demodulated data A and demodulating section 113 outputs demodulated data B.

Next, the operations of receiving apparatus 100 having the above configurations will be explained with reference to FIG.5. Data extracting section 104 extracts a portion occupying data part length T_{DATA} from the beginning of the data part of the direct wave, from the received signal combing the direct wave component, the delayed wave component and the noise component in the receiving apparatus (hereinafter simply "noise component").

In addition, GI extracting section 107 extracts the GI part subtracting the maximum delay time τmax from the GI length T_{GI}. To be more specific, GI extracting section 107 extracts the part of the GI going back the length of the maximum delay time τmax from the beginning of the data part (rear end of the GI), that is, the part of the GI that is not interfered with the data of adjacent time.

Data position adjusting section 108 adjusts the position of the extracted GI such that the rear end of the extracted GI and the rear end of the extracted data partmatch. Combining section 109 combines the extracted GI after the data position adjustment with the data part. This extracted GI and the rear end of the extracted data part extracted by data extracting section 104 are the same signal. To be more specific, the parts subjected to the combining have different noise components, and so combining these parts results in improved SNR (Signal to Noise Ratio) in the combined part. The signal combined in combining section 109 is subjected to signal distortion equalization in frequency domain equalization section 110. The SNR improves in the part combined with the extracted GI, so that error rate performances also improve.

According to Embodiment 1, demodulation can be performed through effective use of the energy of GIs, by extracting the part that is not interfered with the data of adjacent time from the GI included in received data and by combining the extracted GI with the rear end part of the data part, so that the SNR of the combined part improves, thereby reducing errors in the combined part.

### (Embodiment 2)

In the case of multicarrier transmission such as the OFDM scheme, by combining the GI parts, the SNR improves in part of the OFDM symbol in the time domain. However, when an OFDM symbol is converted from the time domain to the frequency domain, SNR improvement is distributed over all subcarriers constituting the OFDM symbol. As a result, although the SNR of each symbol that is mapped to the subcarriers improves equally, the degree of improvement is small.

On the other hand, in single carrier transmission like the present invention, symbols allocated in the time domain are transmitted by single carriers, so that, by combining the GI parts, the SNR improves only in the symbols deriving GIs. Further, the SNR is expected to improve as much as about 3 dB.

With multicarrier transmission, the SNR of each symbol can be improved equally at low levels. On the other hand, in single carrier transmission like the present invention, the SNR can be improved in high levels only in part of the symbols deriving GIs.

The present embodiment will focus on such characteristics of GI parts in single carrier transmissions.

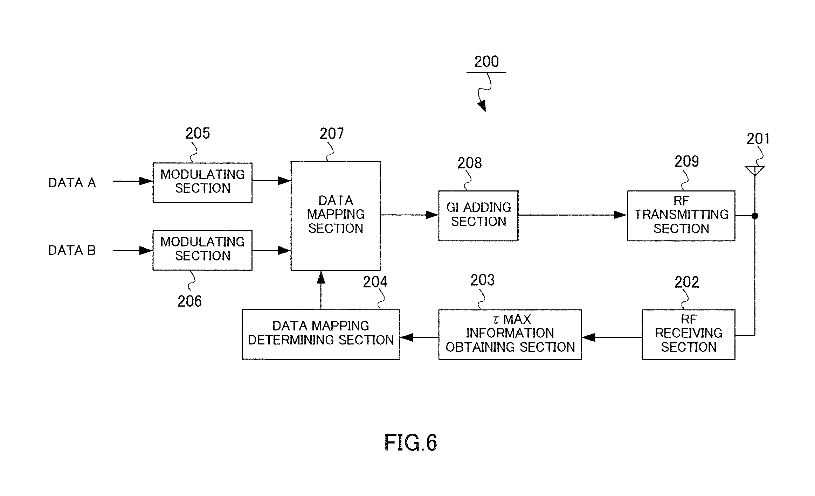

FIG.6 is a block diagram showing a configuration of transmitting apparatus 200, according to Embodiment 2 of the present invention. According to the figure, RF receiving section 202 performs predetermined radio receiving processing such as down-conversion and A/D conversion for a signal received via an antenna 201, and outputs the processed signal to τmax information obtaining section 203.

τmax information obtaining section 203 obtains τmax information showing the maximum time of the delayed wave (the maximum delay time) at a communicating party, and outputs the obtained τmax information to data mapping determining section 204.

Based on τmax information outputted from τmax information obtaining section 203, data mapping determining section 204 determines the data mapping method and reports the determined data mapping method to data mapping section 207. The data mapping method will be described later.

On the other hand, transmission data is separated into data A and data B, and data A is inputted to modulating section 205 and data B is inputted to modulating section 206.

Modulating sections 205 and 206 each modulate the inputted data using modulation schemes such as PSK modulation or QAM modulation and output the modulated signal to data mapping section 207.

Data mapping section 207 maps the signals inputted from modulating sections 205 and 206 by the data mapping method determined by data mapping determining section 204, and outputs the mapped signal to GI adding section 208.

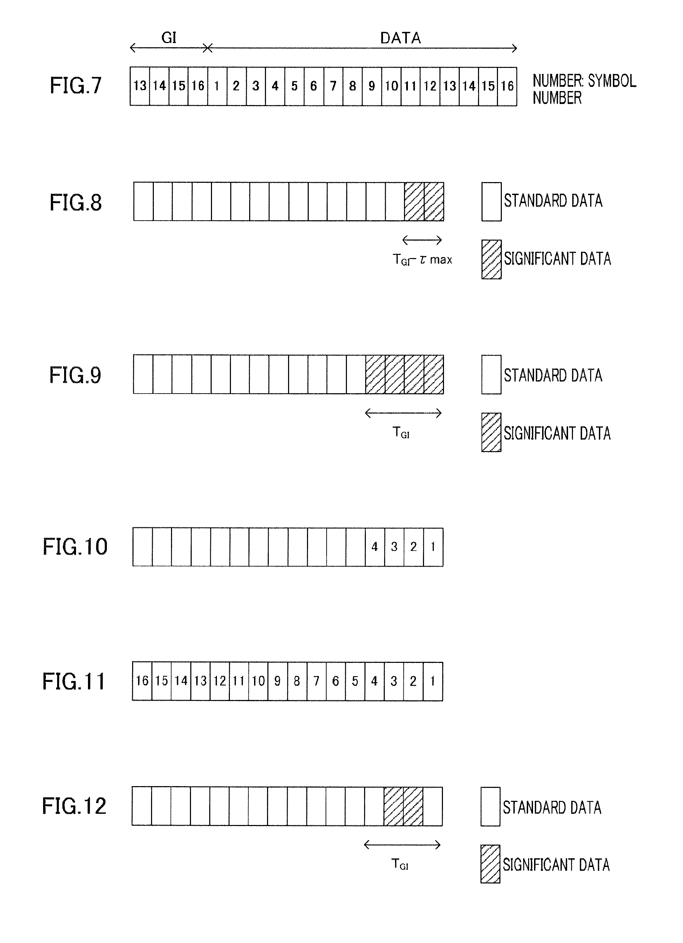

GI adding section 208 generates a GI by copying a predetermined portion from the rear end of the data part of the signal outputted from data mapping section 207, and outputs the signal in which the generated GI is attached to the beginning of the data part, to RF transmitting section 209. FIG.7 shows a specific example of the method of generating GIs. The data part length is 16 symbols, and the GI length is 4 symbols. The symbols allocated in order from the beginning of the data part are distinguished as symbol number 1 to 16. Four symbols of a GI length from the rear end of the data part, that is, symbol number 13 to 16, are copied to generate a GI.

RF transmitting section 209 performs predetermined radio transmitting processing such as D/A conversion and up-conversion with the signal outputted from GI adding section 208, and transmits the processed signal via antenna 201.

Here, the data mapping method in data mapping determining section 204 is explained. Data mapping determining section 204 obtains τmax information transmitted (fed back) from communicating parties. As shown in FIG. 8, data mapping determining section 204 maps significant information such as the control channel, systematic bits, retransmission bits, ACK/NACK information (ACK or NACK), CQI (Channel Quality Indicator), TFCI (Transport Format Combination Indicator), information required for decoding, pilotbits and power control bits, to the part occupying T_{GI}-τmax from the rear end of the data part, that is, the part where error rate performances improve in receiving apparatus 100 of Embodiment 1. According to this mapping method, significant information is correctly transmitted to the receiving apparatus.

As a result, if transmitting apparatus 200 regards data A to be inputted to modulating section 205 as significant information and data B to be inputted to modulating section 206 as standard information other than significant information, data mapping section 207 maps data A to the part occupying T_{GI}-τmax from the rear end of the data part, and data B to the rest of the data part.

According to Embodiment 2, significant information can be transmitted to the receiving apparatus correctly, by finding the part where error rate performances improve based on τmax information and mapping the significant information to the found part, so that overall system throughput improves.

Further, although a case has been described with the present embodiment where the FDD scheme is adopted and where τmax information is fed back from communication parties, the present invention is not limited to this, and it is equally possible to adopt the TDD scheme. In this case, it will be possible to measure τmax based on received signals, but FDD and TDD do not limit the method of obtaining τmax.

### (Embodiment 3)

In Embodiment 2, a data mapping method of mapping data based on τmax information has been described. Now, other data mapping methods will be described below. The data mapping method explained in Embodiment 2 is method A, and the methods B to E, which are different methods from method A, will be described below.

First, as shown in FIG.9, method B, maps significant information to the part occupying the GI length (T_{GI}) from a rear end of the data part. According to this method B, due to variations of τmax, not all significant information that is mapped will have improved error rate performances. Still, when τmax information is difficult to obtain or when installation of additional circuitry for obtaining τmax information is undesirable, error rate performances of significant information are more likely to improve.

Next, as shown in FIG.10, method C maps significant information, in the part occupying the GI length (T_{GI}) from the rear end of the data part, in descending order of significance from the rear end of the data part, because error rate performances are likely to improve nearer the rear end of the data part.

The reason will be explained below. τmax can vary between zero and T_{GI}. When τmax is zero, the error rate improves in the whole of the part occupying T_{GI} from the rear end of the data part. Meanwhile, when τmax is T_{GI}, the error rate in the whole of the part occupying T_{GI} from the rear end of the data part is the same error rate as the rest of the data part, error rate performances are not likely to improve.

In a real system, τmax is between zero and T_{GI}, so that, as shown in FIG.8, when τmax decreases, there are more symbols, from the rear end of the data part, in which the error rate performances improve. Consequently, error rate performances are more likely to improve nearer the rear end of the data part and are less likely to improve farther from the rear end of the data part.

Due to these reasons, according to method C, error rate performances are likely to improve when information becomes more significant.

Next, as shown in FIG.11, method D determines the significance of data and maps data from the rear end of the data part over the entirety of the data part in descending order of significance. According to method D, mapping process over the entirety of the data part can be performed at ease.

Next, as shown in FIG.12, method E maps significant information to the part occupying the GI length (T_{GI}) from the rear end of the data part (that is, the part deriving the GI) excluding the symbols on both ends. In other words, method E maps significant information to a center portion of the part deriving the GI with priority and does not map significant information to both ends of that part. The reason is as follows.

In a real system, the direct wave timing detected on the receiving apparatus side may be detected a little forward or backward with respect to the correct direct wave timing. In the case, in both ends of a GI, interference with the adjacent symbols occurs. That is, in a real system, the SNR is less likely to improve in a little range at both ends of the part deriving the GI.

Due to these reasons, according to method E, error rate performances are likely to improve when information becomes more significant.

Further, according to method E, τmax information is not necessary, so that a τmax information obtaining section needs not be provided in the transmitting apparatus. The same applies to methods B to D.

Next, methods F to H will be described below. Cases will be described here where 1 subframe is formed with a plurality of blocks (here, blocks #1 to #8).

Control information transmitted in the control channel is classified into the information (e.g. ACK /NACK information) that allows delay within a subframe and that nevertheless requires good error rate performance , and the information (e.g. CQIs and TFCIs) that does not allow delay and that therefore needs to be transmitted in the head block within the subframe.

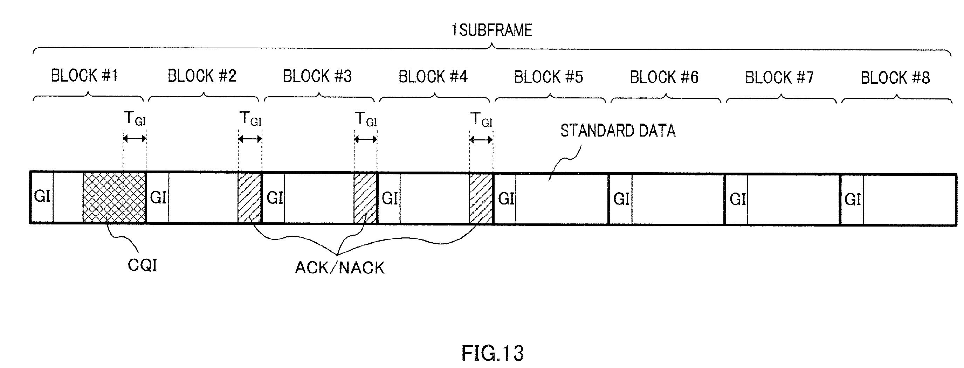

Then, as shown in FIG.13, method F maps the CQI to the part occupying the GI length (T_{GI}) in block #1 of the head block (i.e. the part deriving the GI of block #1) in the subframe and maps ACK/NACK information (ACK or NACK) to parts occupying the GI length (T_{GI}) in blocks #2 to #4 (i.e. the parts deriving the GIs of blocks #2 to #4). Moreover, if the amount of CQI information exceeds the amount of information that can be transmitted in the symbols included in the T_{GI} part (in FIG.7, there are four symbols), as shown in FIG.13, the CQI is mapped beyond the T_{GI} part from the rear end of block #1. That is, the CQI is transmitted in one block alone. On the other hand, if the ACK/NACK information exceeds the amount of information that can be transmitted in the symbols included in T_{GI} part, as shown in FIG.13, the ACK/NACK information is distributed and mapped to a plurality of blocks #2 to #4. This makes it possible to map ACK/NACK information to only the part deriving a GI in each block following the head block. It is also possible to obtain diversity gain for ACK/NACK information by mapping ACK/NACK information as mentioned above.

Moreover, if the amount of CQI information exceeds the amount of information that can be transmitted in the symbols included in the T_{GI} part, the CQI is mapped in one block as follows.

For example, the upper bits in a plurality of bits constituting the CQI are preferentially mapped to the T_{GI} part, because the upper bits require better error rate performances.

Further, if a plurality of CQIs are transmitted in one block, the CQI showing higher quality is preferentially mapped to the T_{GI} part. When scheduling using CQIs are performed in mobile communication systems, better error rate performances are required because the CQIs showing higher quality are more likely to be used for scheduling.

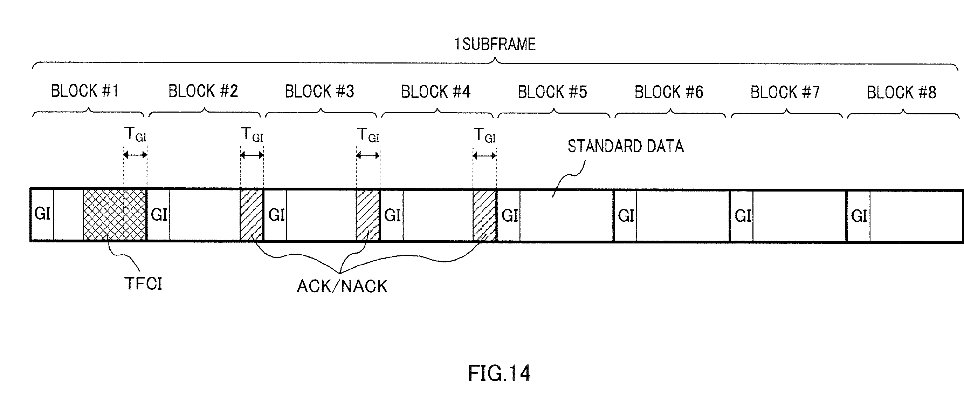

Then, as shown in FIG.14, method G maps the TFCI to the part occupying the GI length (T_{GI}) in block #1 of the head block (i.e. the part deriving the GI of block #1) in the subframe and maps ACK/NACK information (ACK or NACK) the parts occupying the GI length (T_{GI}) in blocks #2 to #4 (i.e. the parts deriving the GIs of blocks #2 to #4). Moreover, if the amount of TFCI information exceeds the amount of information that can be transmitted in the symbols included in the T_{GI} part (in FIG.7, there are four symbols), as shown in FIG.14, the TFCI is mapped beyond the T_{GI} part from the rear end of block #1. That is, the TFCI is transmitted in one block alone. On the other hand, method G is the same as method F, when the amount of ACK/NACK information exceeds the amount of information that can be transmitted in the symbols included in the T_{GI} part.

Further, if the amount of TFCI information exceeds the amount of information that can be transmitted in the symbols included in the T_{GI} part, the information showing the modulation scheme in the TFCI is preferentially mapped to the T_{GI} part. If an error occurs in the information showing the modulation scheme in the TFCI, all data in the subframe that is modulated using the information are in error, and so the information showing the modulation scheme in the TFCI especially requires good error rate performances.

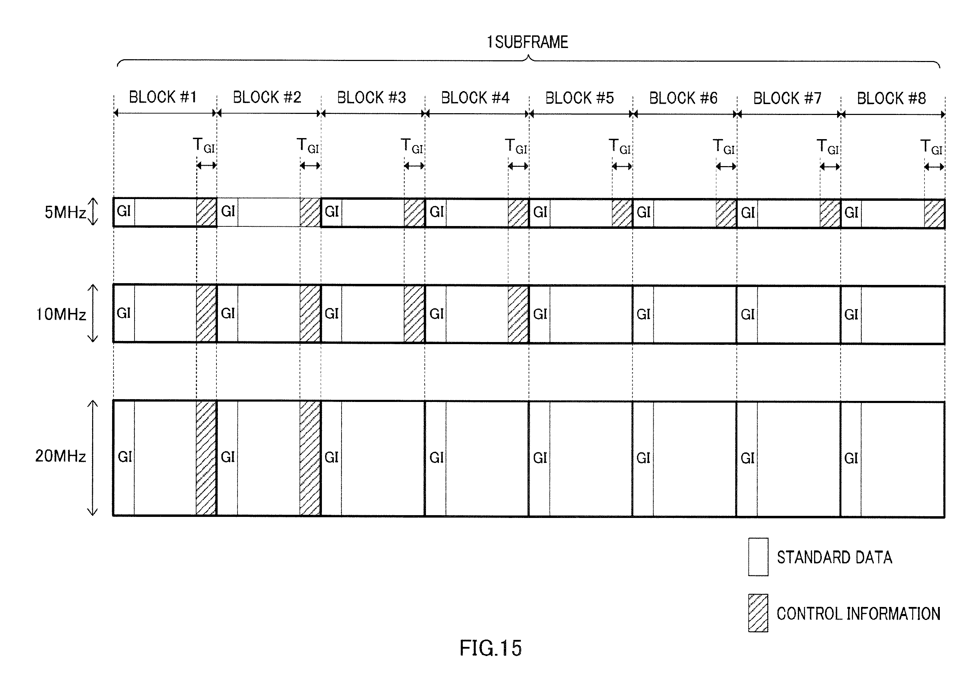

Next, method H changes the number of blocks where control information, which is significant information, is mapped in accordance with transmission bandwidth as shown in FIG.15.

In mobile communication systems, transmission bandwidth can vary. On the other hand, the length of a block and the length of a GI (T_{GI}) are fixed. FIG. 15 shows a case with an example where transmission bandwidth is changed among 5 MHz, 10 MHz and 20 MHz. As shown in FIG.15, when the transmission bandwidth is 20 MHz, the number of symbols included in the T_{GI} part per block is twice as large as in the case of 10 MHz transmission bandwidth and four times as large as in the case of 5 MHz transmission bandwidth. Consequently, when a fixed amount of control information is only mapped to the T_{GI} part of each block (i.e. the part deriving the GI of each block), it is possible to transmit control information in a smaller number of blocks when the transmission bandwidth becomes wider. In method H, as described above, the number of blocks where control information is mapped is changed in accordance with transmission bandwidth. To be more specific, the control information transmitted using the T_{GI} parts alone in eight blocks #1 to #8 in the case of 5 MHz transmission bandwidth is transmitted using the T_{GI} parts alone in four blocks #1 to #4 in the case of 10 MHz transmission bandwidth, and transmitted using the T_{GI} parts alone in two blocks #1 and #2 in the case of 20 MHz transmission bandwidth. In this way, method H transmits control information using T_{GI} parts alone in order from the head block in a subframe. Consequently, method H makes it possible to transmit control information efficiently in accordance with changes of transmission bandwidth.

### (Embodiment 4)

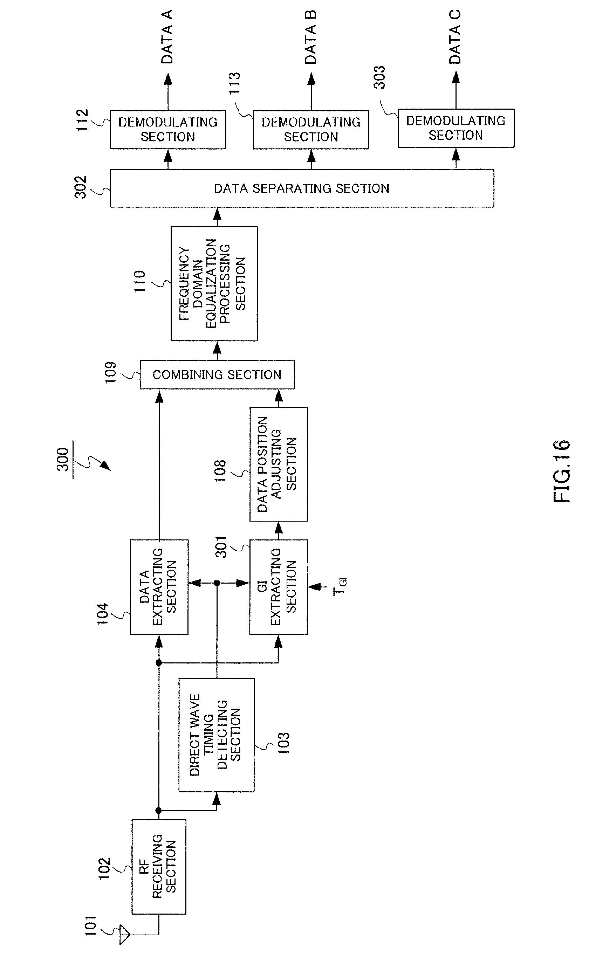

FIG.16 is a block diagram showing a configuration of receiving apparatus 300, according to Embodiment 4 of the present invention. According to FIG.16, the same components as those described in FIG.3 will be assigned the same reference numerals and their detailed descriptions will be omitted. FIG.16 is different from FIG.3 in adding demodulating section 303, in changing GI extracting section 107 to GI extracting section 301 and data separating section 111 to data separating section 302, and in removing maximum delay time detecting section 105 and extracted GI length determining section 106.

GI extracting section 301 acquires T_{GI} which shows the length of the GI in received data, and extracts the entire GI (the whole, from the beginning to the rear end) from the direct wave of the signal outputted from RF receiving section 102, based on the acquired T_{GI} and the timing outputted from direct wave timing detecting section 103. The extracted GI is outputted to data position adjusting section 108.

Data separating section 302 separates the signal outputted from frequency domain equalization processing section 110 at the position going back T_{GI} from the rear end of the data part and at the position going back two T_{GI}'s from the rear end of the data part. The part including the beginning of the data part, not combined with the extracted GI, is outputted to demodulating section 112. The part including the rear end of the data part, combined with the extracted GI, is outputted to demodulating section 113. The part between the position going back T_{GI} from the rear end of the data part and the position going back two T_{GI}'s from the rear end of the data part is outputted to demodulating section 303.

Demodulating section 303 demodulates the data outputted from data separating section 302 and outputs data C.

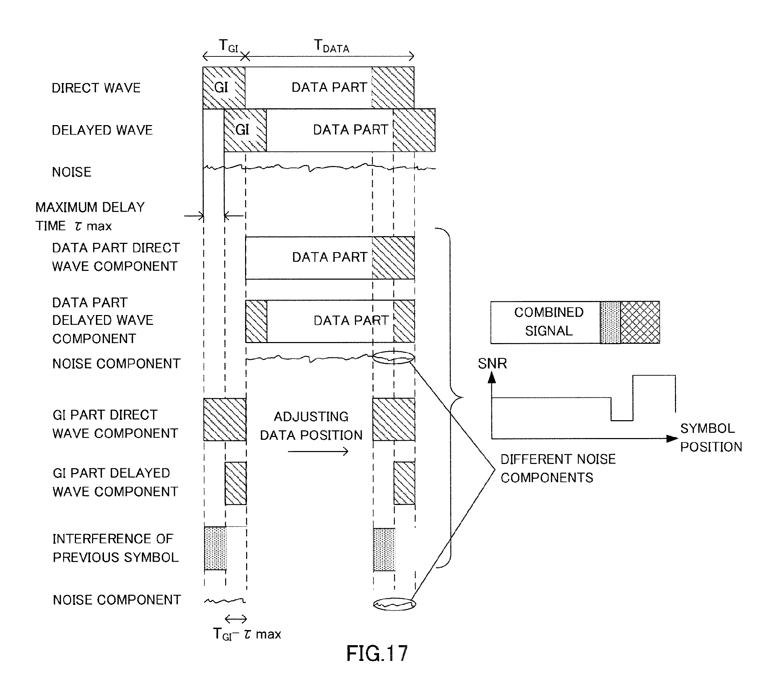

Next, the operations of receiving apparatus 300 having the above configuration will be explained with reference to FIG.17. Data extracting section 104 extracts data occupying the data part length T_{DATA} from the beginning of the data part of the direct wave, from the received signal combing the direct wave component, the delayed wave component and the noise component in the receiving apparatus. In addition, GI extracting section 301 extracts the GI of the direct wave. The extracted GI includes the GI of the direct wave, a portion of the GI of the delayed wave (T_{GI}-τmax), interference by the previous symbol (τmax) and the noise component.

Data position adjusting section 108 adjusts the position of the extracted GI such that the rear end of the extracted GI and the rear end of the extracted data partmatch. Combining section 109 combines the extracted GI after the data position adjustment with the data part.

The combined signal, combined as such, is the signal combining all energy of the GI of the direct wave, so that the SNR improves in the part where the extracted GI is combined. On the other hand, the part immediately preceding the part combined with the extracted GI includes interference from the previous symbol, and so the SINR of the immediately preceding part degrades. Here, the average SINR over the entirety from the beginning to the rear end of the data part improves reliably and so error rate performances improve.

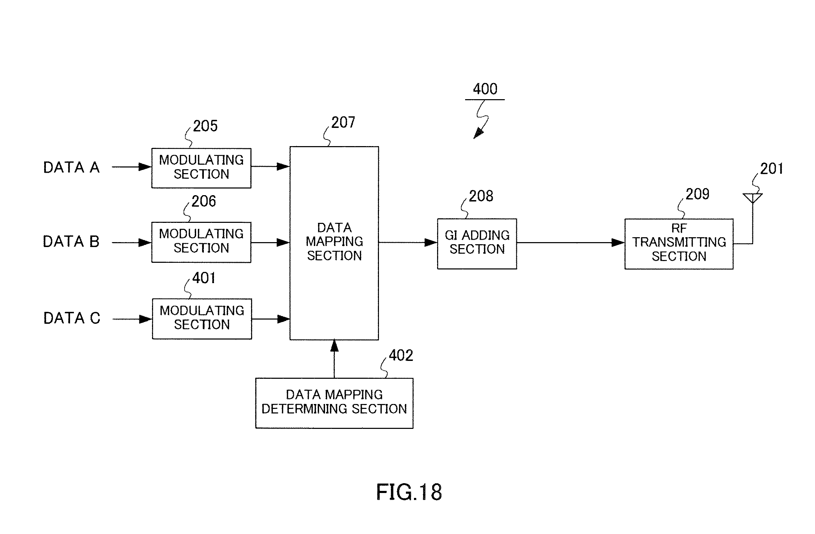

FIG.18 is a block diagram showing a configuration of transmitting apparatus 400, according to Embodiment 4 of the present invention. Further, according to FIG. 18, the same components as those described in FIG.6 are assigned the same reference numerals and the details will be omitted. In comparison to FIG.6, FIG.18 adds modulating section 401, changes data mapping determining section 204 to data mapping determining section 402, and removes RF receiving section 202 and τmax information obtaining section 203.

Modulating section 401 modulates inputted data C using modulation schemes such as PSK modulation and QAM modulation and outputs the modulated signal to data mapping section 207.

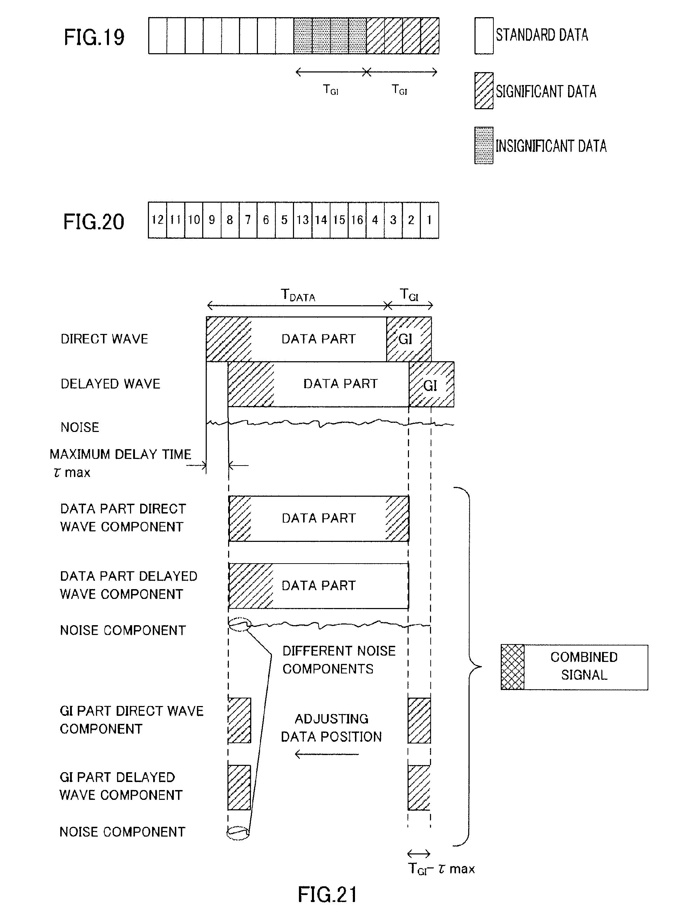

Data mapping determining section 402 determines the data mapping method and reports the determined data mapping method to data mapping section 207. Here, the data mapping method reported to data mapping section 207 will be explained using FIG.19. The data mapping method, as shown in FIG.19, maps significant information such as control channels, information required for decoding, systematic bits, pilot bits and power control bits and ACK/NACK information (ACK or NACK), to the part occupying T_{GI} length from the rear end of the data part, that is, the part where error rate performances improve. Further, the data mapping method maps insignificant information such as parity bits and repeating bits to the part between the position going back T_{GI}, from the rear end of the data part and the position going back two T_{GI}'s from the rear end of the data part, that is, the part where error bit performances degrade. According to this method, significant information is transmitted correctly to the receiving apparatus and the transmission format can be utilized effectively by mapping insignificant information to the part where quality degrades.

As a result, if transmitting apparatus 400 decides data A to be inputted to modulating section 205 significant information, data C to be inputted to modulating section 401 insignificant information and data B to be inputted to modulating section 206 other standard information, data mapping section 207 maps data A to the part occupying T_{GI} from the rear end of the data part, data C to the part occupying the part between the position going T_{GI} back from the rear end of the data part and the position going two T_{GI}s back from the rear end of the data part, and data B to the rest of the data part (the position going back more than two T_{GI}s).

Data mapping determining section 402 may also use the method shown in FIG.20 in addition to the data mapping method described above. This method determines the significance of data and maps data in descending order of significance, to the part of good error rate performances. According to this method, information of great significance is transmitted reliably to the receiving apparatus.

According to Embodiment 4, the GI of the direct wave included in the received signal is extracted and the part of the extracted GI is combined with the rear end part of the data part before frequency domain equalization processing is performed, so that demodulation is performed through effective use of energy of the GI. As a result, the SNR improves in the combined part.

### (Embodiment 5)

Although cases have been explained with Embodiments 1 to 4 above where a predetermined portion of the rear end part of the data part is added to the beginning of the data part as a GI, a case will be explained with the present embodiment where a predetermined portion of the front part of the data part is added to the rear end of the data part as a GI. Further, the same receiving apparatus components according to Embodiment 5 of the present invention are shown in FIG.3 in Embodiment 1, and the details are omitted.

In FIG.21, the receiving process according to the present embodiment is shown in a schematic manner. Data extracting section 104 extracts the part occupying data part length T_{DATA} from the beginning of the data part of the direct wave, from the received signal combined with the direct wave component, the delayed wave component and the noise component in the receiving apparatus.

Further, GI extracting section 107 extracts the GI part going back T_{GI}-τmax from the rear end of the part of the GI of the direct wave. That is, GI extracting section 107 extracts the portion of the GI that is not interfered with data of adjacent time.

Data position adjusting section 108 adjusts the position of the extracted GI such that the beginning of the extracted GI and the beginning of the extracted data part match. Combining section 109 combines the extracted GI after the data position adjustment with the data part.

Next, data mapping methods E to H according to the present embodiment will be explained. Further, the same transmitting apparatus components according to Embodiment 5 of the present invention are shown in FIG.6 in Embodiment 2, and the details are omitted.

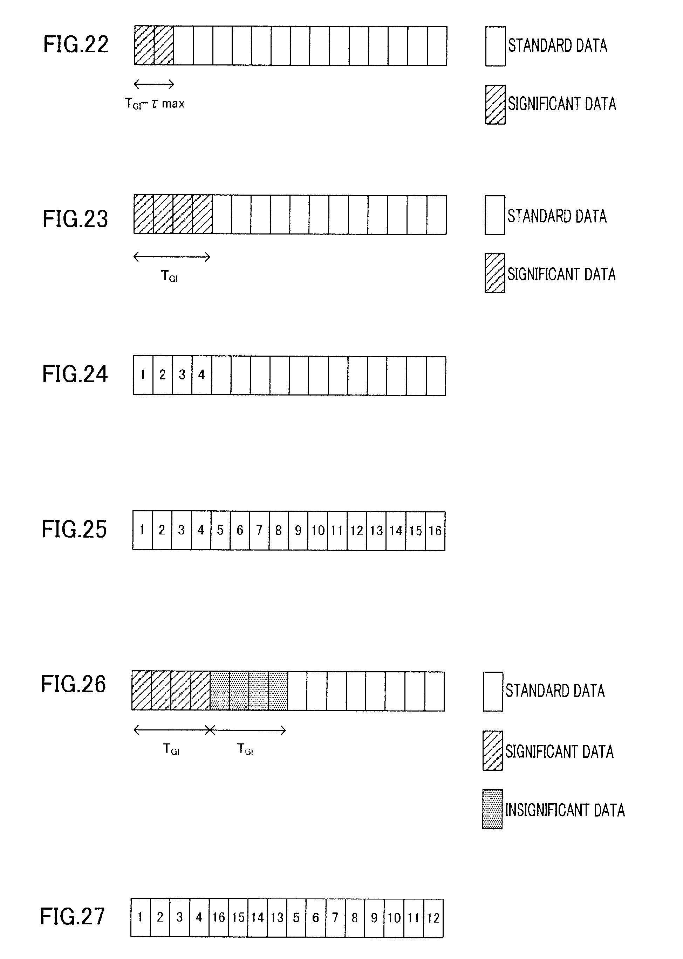

First, as shown in FIG.22, method E, which corresponds to method A shown in FIG.8, maps significant information to the part occupying T_{GI}-τmax from the beginning of the data part, that is, to the part where error rate performances improve.

As shown in FIG.23, method F, which corresponds to method B in FIG.9, maps significant information to the part occupying the GI length (T_{GI}) from the beginning of the data part.

As shown in FIG.24, method G, which corresponds to method C in FIG.10, maps significant information in descending order of significance, from the beginning of the data, to the part occupying the GI length (T_{GI}) from the beginning of the data part.

As shown in FIG.25, method H, which corresponds to method D in FIG.11, determines the significance of data, and maps data from the beginning of the data part, over the whole of the data part, in descending order of significance.

According to Embodiment 5, when a predetermined portion of the front part of the data part is added to the rear end of the data part as a GI, the energy of the GI can be utilized effectively for demodulation, so that the SNR of the combined part improves, thereby reducing errors in the combined part. Further, significant information can be correctly transmitted to the receiving apparatus, so that overall system throughput improves.

### (Embodiment 6)

A case has been described above with Embodiment 5 where a predetermined portion of the front part of the data part is added to the rear end of the data part as a GI and a portion of the GI is combined with the data part. On the other hand, a case will be explained with this Embodiment 6 where a predetermined portion of the front part of the data part is added to the rear end of the data part as a GI and the entire GI (the whole, from the beginning to the rear end) is combined with the data part, employing mapping methods I and J. Further, the same transmitting apparatus components according to Embodiment 6 of the present invention are shown in FIG.18 in Embodiment 4, and the details are omitted.

Method I, as shown in FIG.26, corresponds to the method shown in FIG.19 and maps significant information to the part occupying T_{GI} from the beginning of the data part, maps insignificant information to the part between the position going forward T_{GI} from the beginning of the data part and the position going forward two T_{GI}s from the beginning of the data part, and maps standard information to the rest of the data part (at or after the position two T_{GI}s from the beginning of the data part) .

As shown in FIG.27, method J, which corresponds to the method shown in FIG. 20, determines the significance of data and maps data in descending order of significance, to the part of good error rate performances.

In this way, according to Embodiment 6, when a predetermined portion of the front part of the data part is added to the rear end of the data part as a GI and the GI and the data part are combined, significant information can be transmitted correctly to the receiving apparatus. Thus, overall system throughput improves.

Further, "standard information" according to the above embodiments includes, for example, data channels such as HS-DSCH, DSCH, DPDCH, DCH, S-CCPCH and FACH in 3GPP standards.

Furthermore, "significant information" according to the above embodiments includes, for example in 3GPP standards, HS-SCCH and HS-DPCCH associated with HS-DSCH, DCCH S-CCPCH, P-CCPCH, and PCH for reporting control information for RRM (Radio Resource Management), and, DPCCH for controlling a BCH physical channel.

In addition, "significant information" according to the above embodiments includes the TFCI. The TFCI is information for reporting data formats, and so, if the TFCI is received incorrectly, the data of the whole frame or all subframes will be received incorrectly. Accordingly, it is effective to process the TFCI as significant information in the above embodiments and improve error rate performances of the TFCI.

Further, if control channels are roughly classified into the common control channel and the dedicated control channel, the common control channel may be processed as significant information in the above embodiments and the dedicated control channel may be processed as standard information in the above embodiments. The common control channel is commonly transmitted to a plurality of mobile stations and so requires better error rate performances than the dedicated control channel that is transmitted individually to each mobile station.

Further, the significant information in the above embodiments include initialization information (initialization vector) used in information compression or data encryption. This initialization vector is provides a base for later communications, and so, if the initialization vector is received incorrectly, a series of communications later may be not be possible at all. Accordingly, it is effective to process initialization vector as significant information in the above embodiments and improve error rate performances of the initialization vector.

Further, significant information in the above embodiments may include data of the center channel in speech multiplex signals. For speech multiplex signals, errors with the data of the center channel have more degradative influence in audibility than errors with other channels (the right, left or rear channel).

For example, although with the above embodiments cases have been described where the present invention is configured by hardware, the present invention may be implemented by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI, " or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No. 2006-070963, filed on March 15, 2006, including the specification, drawings and abstract is incorporated herein by reference in its entirety.

### Industrial Applicability

The radio receiving apparatus and the radio transmitting apparatus according to the present invention can demodulate utilizing GIs effectively and improve received quality and may be applied to base station apparatuses and mobile station apparatuses used in a frequency equalization single-carrier transmission system.

## Claims

1. A radio transmission apparatus comprising:
a mapping section that maps one of a channel quality indicator and a transport format combination indicator to a part occupying a cyclic prefix length from an end of a data part in a head block of a subframe, and maps one of ACK and NACK to a part occupying the cyclic prefix length from an end of a data part in a block following the head block;
an adding section that generates a cyclic prefix having the cyclic prefix length from each data part and adds the generated cyclic prefix to a beginning of the each data part; and
a transmitting section that transmits data with the cyclic prefix.

2. A base station apparatus comprises the radio transmitting apparatus according to claim 1.

3. A mobile station apparatus comprises the radio transmitting apparatus according to claim 1.

4. A radio transmission method comprising:
a mapping step of mapping one of a channel quality indicator and a transport format combination indicator to a part occupying a cyclic prefix length from an end of a data part in a head block of a subframe, and mapping one of ACK and NACK to a part occupying the cyclic prefix length from an end of a data part in a block following the head block;
an adding step of generating a cyclic prefix having the cyclic prefix length from each data part and adds the generated cyclic prefix to a beginning of the each data part; and
a transmitting step of transmitting data with the cyclic prefix.
